# EUROPEAN PATENT APPLICATION

(11) **EP 1 220 215 A2**
(43) Date of publication of application: **03.07.2002**
(21) Application number: 01128257.1
(22) Date of filing: 28.11.2001
(51) Int. Cl.: G11B 19/00, G11B 31/00

(54) **Standalone MP3 recording station**

(30) Priority: 29.12.2000 US 751257
(71) Applicant: Gateway, Inc., North Sioux City, South Dakota 57049 (US)
(72) Inventor: Leapman, Scott D., Sioux City, IA 51104 (US)
(74) Representative: Viering, Jentschura & Partner

(57) **Abstract**

An apparatus and a method are disclosed for converting audio content to digital files (*e*.*g*., MP3 files) and then transferring the converted digital files to a portable player utilizing a standalone unit without the requirement of a computer. An apparatus and a method are also disclosed for converting content from a first recordable media to another format and then transferring the converted content to a portable player or a second recordable media upon a single action of a user, such as pressing a single button on an interface. Further, an apparatus and a method are disclosed for docking a portable player with a standalone device capable of transferring digital files (*e*.*g*., MP3 files) to the portable player while also recharging the portable player.

## Description

### FIELD OF THE INVENTION

The present invention relates generally to media players, and more specifically, to a multi-purpose standalone recording station.

### BACKGROUND OF THE INVENTION

The desire of the public to listen to audio files via computers and portable players is becoming increasingly popular. Audio files may be created, for example, by compressing audio content from a compact disc. One type of compressing standard is MPEG audio layer-3, also known as MP3. The most popular ways to listen to MP3 files are through a personal or portable computer, and a portable MP3 player. Portable MP3 players, similar to mobile compact disc players and audio tape players in size and feel, can store MP3 files. A user may then listen to the MP3 files stored on the portable player at any time without any connection to a personal or portable computer.

Through the development of MP3 files and recordable compact discs, it is now possible for the general public to create digital quality sets of music which can be placed on portable MP3 players and recordable compact discs. However, in order-to achieve a personal music data bank, a user must have access to a personal or portable computer and must have the technical ability to understand the conversion software to compress the music into the MP3 format. Further, in order to enjoy the benefits of the portable MP3 player, the user must be able to obtain and transfer MP3 files, which may also require the user to have a personal or portable computer and the conversion software. There is a large segment of the population, people in high school and college for example, that have a large compact disc music collection and would like to reap the benefits of MP3 technology. Without access to and a working knowledge of computers, however, such people are not able to utilize and benefit from MP3 technology.

Consequently, it would be advantageous if an apparatus and a method existed for converting and transferring MP3 files to portable players in a standalone unit without the requirement of a computer. Further, it would be advantageous if an apparatus and a method existed for converting content from a first recordable media to another format and then transferring the converted content to a second recordable media or a portable player upon a single action of a user. It would also be advantageous if an apparatus and a method existed for docking a portable player and transferring MP3 files to the portable player while also recharging the portable player.

### SUMMARY OF THE INVENTION

Accordingly, the present invention is directed to an apparatus and a method for converting audio content to digital files *(e.g.,* MP3 files) and then transferring the converted digital files to a portable player utilizing a standalone unit without the requirement of a computer. Further, the present invention is directed to an apparatus and a method for converting content from a first recordable media to another format and then transferring the converted content to a portable player or a second recordable media upon a single action of a user. The present invention is also directed to an apparatus and a method for docking a portable player with a standalone device capable of transferring digital files *(e.g.,* MP3 files) to the portable player while also easily recharging the portable player.

It is to be understood that both the foregoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:
FIG. 1 depicts an exemplary embodiment of a recording station of the present invention;
FIG. 2 depicts an exemplary embodiment of a process performed to transfer audio files to a portable player in accordance with the present invention;
FIG. 3 depicts an exemplary flow chart of a process of obtaining and converting personalized audio files from an audio compact disc and then transferring the converted audio files to a portable player in accordance with the present invention; and
FIG. 4 depicts an exemplary flow chart of a process of converting audio files from an audio compact disc into another format and then transferring the converted audio files to a recordable compact disc.

### DETAILED DESCRIPTION OF THE INVENTION

Reference will now be made to presently preferred embodiments of the invention, examples of which are illustrated in the accompanying drawings.

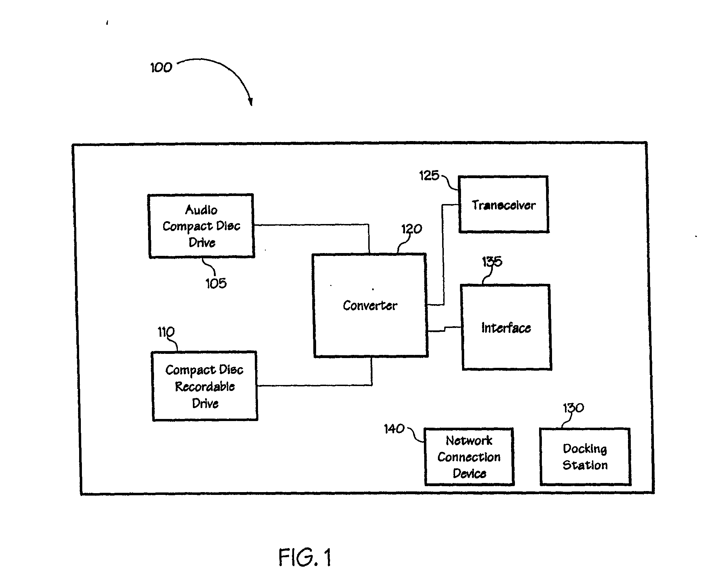

Referring to FIG. 1, a recording station 100 in accordance with a preferred embodiment of the present invention is shown. The recording station 100 is preferably capable of converting audio content from compact discs to another format. One type of conversion may include compressing the audio content into digital files. An example of such compression may be in accordance with Motion Picture Experts Group (MPEG) compression systems, specifically MPEG audio Layer-3 (MP3). The-MP3 format is a compression system for audio content which reduces the number of bytes in a given piece of music without substantially hurting the quality of the music. Music stored in the MP3 format is becoming increasingly popular as it provides the ability to store and maintain a large amount of music upon the memory of a computer. Further, the music may be stored in the memory of a portable MP3 player, which allows users to listen to the MP3 files in any desired location.

Many people today have large compact disc music collections since compact discs were generally the preferred choice of recordable media prior to the development of MP3 technology. However, as MP3 files and portable players capable of playing MP3 files are becoming popular, consumers desire a method of converting the music on compact discs to MP3 files. In order to convert the music on compact discs to MP3 files, a computer and software, as well as a technical ability to understand the computer and software interoperability, have typically been required.

The recording station 100 of the present invention provides an easier, portable, and less expensive apparatus for conversion of audio content into MP3 files and subsequent transfer of the MP3 files onto a portable player or other recordable media. The recording station 100 preferably includes at least two compact disc drives, one which may be utilized for audio compact discs 105 and another which may be utilized for recordable compact discs 110. The recording station 100 also includes a converter 120 for receiving audio content from an audio compact disc in the audio compact disc drive 105, and compressing the audio content into an MP3 format.

The recording station 100 further includes a transceiver/data port 125 for transferring the MP3 files to a portable player. The MP3 files may be transferred to the portable player through the transceiver/data port 125 using a hardwire transfer, such as a Universal Serial Bus (USB) port, serial port, parallel port, or the like. The MP3 files may also be wirelessly transmitted to the portable player through the transceiver/data port 125 using wireless technologies or links, such as an infrared port, a radio-frequency (RF) communications adapter compliant with Bluetooth or IEEE 802.11 standards, and the like.

Additionally, the recording station 100 includes a pre-fabricated docking site or station 130. Portable players typically utilize vast amounts of energy. Rather than recharging the portable player with an AC electrical converter, the portable player may be recharged by coupling the portable player to the docking site 130 of the recording station 100. In an exemplary embodiment, while the portable player is coupled to the docking site 130 of the recording station, the recording station 100 transfers MP3 files to the portable player and also recharges the portable player.

Furthermore, the recording station 100 includes an interface 135 which allows initiation of desired functions by a single action of a user. For example, with a compact disc in the audio compact disc drive 105, a send button may be depressed, thus initiating conversion of audio content from the audio compact disc into MP3 files and then transfer of the MP3 files to the portable player. As another example, with an audio compact disc in the audio compact disc drive 105 and a recordable compact disc in the recordable compact disc drive 110, a copy button may be depressed, thus initiating conversion of audio content from the audio compact disc into MP3 files and then transfer and storage of the MP3 files onto the recordable compact disc in the recordable compact disc drive 110.

The recording station 100 also preferably includes a built-in network connection device 140 (such as a modem, a network adapter, a universal asynchronous receiver-transmitter (UART) port, or the like), which allows the recording station 100 to access information on a network such as the Compact Disc Database (CDDB). The CDDB is capable of providing the recording station 100 with information regarding artists, titles, and the like for particular audio content. Further, the network connection device 140 may also be a Home Phoneline Networking Alliance (HPNA) connection to a remote personal computer, which may function as a file host or as a server for an Internet connection.

While providing conversion and transfer functions, the recording station 100 of the present invention may be designed to incorporate aspects of conventional and portable compact disc players. For example, the recording station 100 may include an AM/FM radio, a tape player, and/or a compact disc player. As a result, many types of audio content may be accessed, retrieved, and delivered in a single, standalone recording station 100.

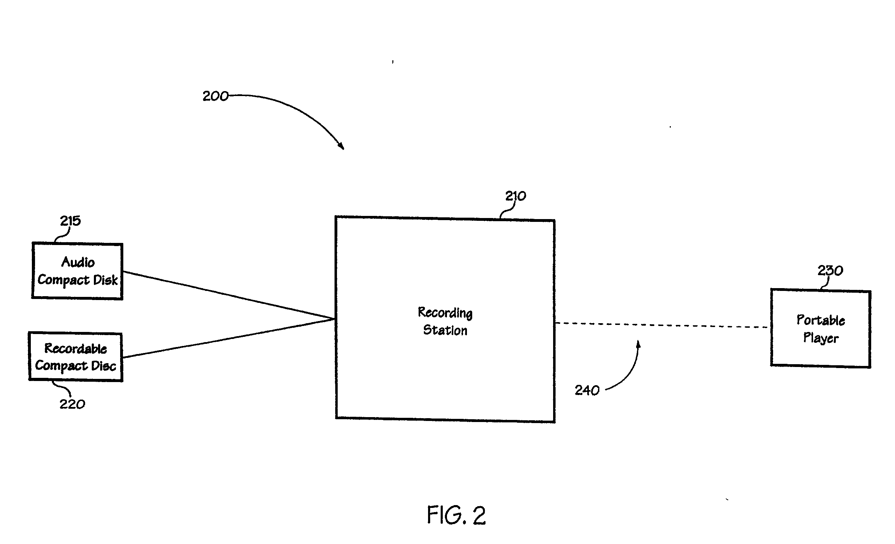

Referring now to FIG. 2, an exemplary embodiment of a process 200 performed to transfer audio files to a portable player in accordance with the present invention is shown. The audio content that the user desires to be transferred to the portable player may be contained on an audio compact disc 215 or a recordable compact disc 220, which is placed within a compact disc drive of a recording station 210.

In one embodiment of the present invention, the user utilizes an interface of the recording station 210 and presses a send button on the interface. This begins the compression of the desired audio content to be transferred from the audio compact disc 215 to the portable player 230. The compression of the audio content is preferably in accordance with the MP3 format. If the audio content has been placed on the recordable compact disc 220 and is already in the MP3 format, the compression process may be omitted. When the audio content has been compressed into the desired format (*e.g*., MP3 format), it is transferred from the recording station 210 to the portable player 230.

The transfer of the audio files from the recording station 210 to the portable player 230 may be accomplished via a hardwire connection 240 (such as a USB port, a serial port, a parallel port, and the like) or a wireless connection 240 (such as an infrared port, an RF adapter compliant with the Bluetooth or IEEE 802.11 standard, and the like). Further, it may be possible to transfer the audio files from the portable player 230 to the recording station 210, which may then transfer the audio files to another portable player (not shown), if the recording station 210 is capable of two-way transfer and receipt of audio files.

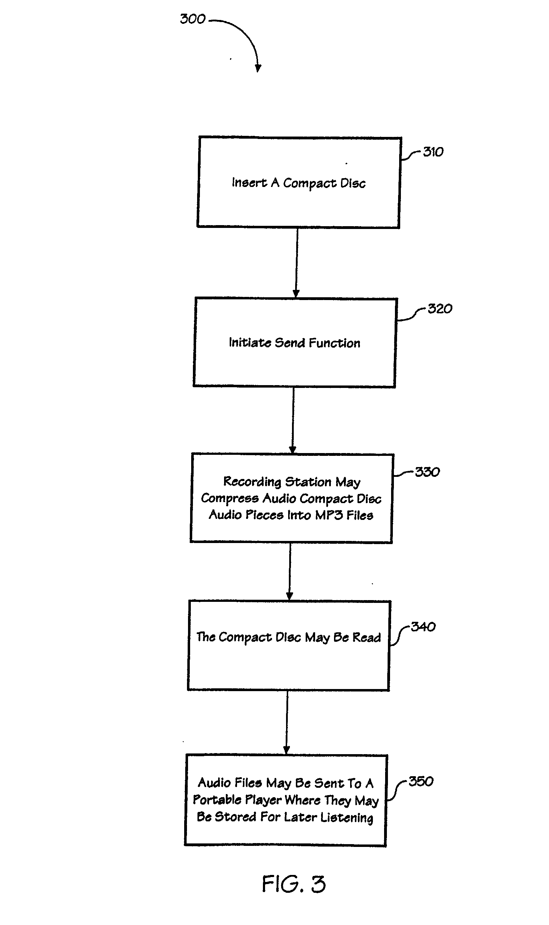

Referring now to FIG. 3, an exemplary flow chart of a process 300 for obtaining and converting personalized audio files from an audio compact disc and then transferring the converted audio files to a portable player in accordance with the present invention is shown. In step 310, an audio compact disc is inserted into the disc drive of the recording station. A send function is then initiated in step 320, for example, by pressing a button located on the interface of the recording station.

In step 330, the recording station compresses audio pieces from the audio compact disc into digital audio files, preferably MP3 files. The audio pieces may include commercials, songs, and the like, as well as portions thereof. The user is able to select specific portions from the audio compact disc for conversion and transfer. For example, the specific portions may be one or more songs on a compact disc rather than all of the songs stored on the compact disc.

While compressing the audio pieces from the compact disc, the compact disc may also be read by the recording station at step 340. Such reading of the compact disc provides the digital audio files with information about the compressed audio pieces (*e.g*., titles, recording artists, and the like). The recording station may also include a network connection device (such as a modem, a phone line, or the like) to access the Compact Disc Database (CDDB), which may provide additional information about the compressed audio pieces. Upon compression into the digital audio files and reading of the compact disc, the digital audio files are sent to a portable player and stored by the portable player for later listening in step 350.

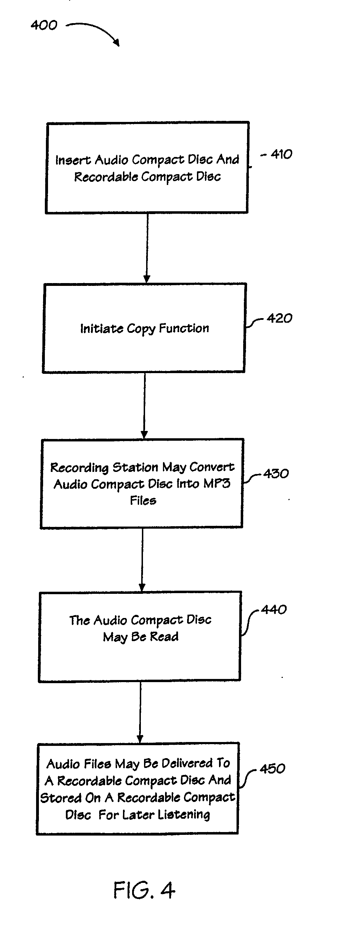

Referring now to FIG. 4, an exemplary embodiment of a process 400 for converting audio files from an audio compact disc into another format and then transferring the converted audio files to a recordable compact disc in accordance with the present invention is shown. In step 410, an audio compact disc and a recordable compact disc are inserted into compact disc drives of the recording station. A copy function is then initiated in step 420, for example, by pressing a button located on the interface of the recording station.

In step 430, the recording station compresses audio pieces from the audio compact disc into digital audio files, preferably MP3 files. As discussed above, the audio pieces may include commercials, songs, and the like, as well as portions thereof. The user is able to select specific portions from the audio compact disc for conversion and transfer.

While compressing the audio pieces from the audio compact disc, the audio compact disc may also be read by the recording station at step 440. Such reading of the audio compact disc provides the audio files with information about the compressed audio pieces (*e.g*., titles, recording artists, and the like). As discussed above, the recording station may also include a network connection device (such as a modem, a phone line, or the like) to access the CDDB, which may provide additional information about the compressed audio pieces. Upon compression into the digital audio files and reading of the audio compact disc, the digital audio files are sent to and stored on the recordable compact disc for later listening in step 450.

In the embodiments of the present invention shown in FIGS. 1-4, compression of audio content from compact discs into an MP3 format is given as an example of conversion of audio content into another format by a single action of a user. However, other types of compression standards may be utilized by one of ordinary skill in the art to convert audio content from one format to another format without departing from the scope and spirit of the present invention. Additionally, the present invention is not limited to the conversion of audio content, but video and other forms of content may also be converted and transferred upon a single action of the user utilizing the recording station without departing from the scope and spirit of the present invention. Further, other types of recordable media may be utilized by one of ordinary skill in the art without departing from the scope and spirit of the present invention. For example, audio content may be received from, as well as stored on, a mini-disc, laser disc, digital video disc, and the like by the recording station of the present invention.

Although embodiments of the present invention have been described with a certain degree of particularity, it should be recognized that elements thereof may be altered by persons skilled in the art without departing from the spirit and scope of the invention. It is believed that the system and the method for the present invention and many of its attendant advantages will be understood by the foregoing description, and it will be apparent that various changes may be made in the form, construction, and arrangement of the components thereof without departing from the scope and spirit of the invention or without sacrificing all of its material advantages, the form herein before described being merely an explanatory embodiment thereof. It is the intention of the following claims to encompass and include such changes.

## Claims

1. A recording station, comprising:
an interface;
a drive capable of receiving a recordable media having content recorded thereon; and
a converter capable of converting said content recorded on said recordable media to another format upon a single action by a user.

2. The recording station as claimed in claim 1, wherein said single action is actuating a button located on said interface.

3. The recording station as claimed in claim 1, wherein said recordable media is at least one of a compact disc, a mini-disc, a laser disc, and a digital video disc.

4. The recording station as claimed in claim 1, further comprising a transceiver capable of transferring said content converted to another format to a portable player.

5. The recording station as claimed in claim 4, wherein said transceiver is capable of transferring said converted content to said portable player through at least one of: a hardwire connection and a wireless connection.

6. The recording station as claimed in claim 1, further comprising a docking station capable of coupling to a portable player, said docking station further capable of recharging said portable player and transferring said content converted to another format to said portable player when said portable player is coupled to said docking station.

7. The recording station as claimed in claim 1, further comprising a second drive capable of receiving a second recordable media, wherein said content converted to another format is transferred to said second recordable media in said second drive.

8. The recording station as claimed in claim 1, wherein said content converted to another format is in accordance with MP3 compression standards.

9. A method of converting content stored on a recordable media to another format, comprising the steps of:
loading the recordable media into a converting device;
selecting the content stored on the recordable media to be converted;
actuating a single control on said converting device; and
converting said selected content stored on the recordable media to another format upon actuation of said single control on said converting device.

10. The method as claimed in claim 9, wherein said single control is a button located on said converting device.

11. The method as claimed in claim 9, wherein said recordable media is at least one of a compact disc, a mini-disc, a laser disc, and a digital video disc.

12. The method as claimed in claim 9, further comprising the step of transferring said selected content converted to another format to a portable player.

13. The method as claimed in claim 9, further comprising the step of transferring said selected content converted to another format to a second recordable media.

14. The method as claimed in claim 9, wherein said selected content converted to another format is in accordance with MP3 compression standards.

15. A recording station, comprising:
an interface;
a drive capable of receiving a recordable media; and
a transceiver capable of transferring content stored on said recordable media to another device upon a single action by a user.

16. The recording station as claimed in claim 15, wherein said single action is actuating a button located on said interface.

17. The recording station as claimed in claim 15, wherein said another device is a portable player.

18. The recording station as claimed in claim 15, wherein said recordable media is at least one of a compact disc, a mini-disc, a laser disc, and a digital video disc.

19. The recording station as claimed in claim 15, further comprising a converter capable of converting said content stored on said recordable media into another format.

20. The recording station as claimed in claim 19, wherein said content converted to another format is in accordance with MP3 compression standards.

21. The recording station as claimed in claim 15, further comprising a docking station capable of coupling to said another device, said docking station further capable of recharging said another device and transferring said content stored on said recordable media to said another device when said another device is coupled to said docking station.

22. The recording station as claimed in claim 15, wherein said transceiver is capable of transferring said content stored on said recordable media to said another device through one of: a hardwire connection and a wireless connection.
